# EUROPÄISCHE PATENTSCHRIFT

(11) **EP 3 121 042 B1**
(45) Veröffentlichungstag und Bekanntmachung des Hinweises auf die Patenterteilung: **01.01.2020**
(21) Anmeldenummer: 16180398.6
(22) Anmeldetag: 20.07.2016
(51) Int. Cl.: B60H 1/00, B60P 3/36

(54) **SCHRANKSYSTEM FÜR EINEN CARAVAN**
CABINET SYSTEM FOR A CARAVAN
SYSTEME D'ARMOIRE POUR UNE CARAVANE

(30) Priorität: 21.07.2015 DE 202015103831 U
(43) Veröffentlichungstag der Anmeldung: 25.01.2017
(73) Patentinhaber: Truma Gerätetechnik GmbH & Co. KG, 85640 Putzbrunn (DE)
(72) Erfinder: Oster, Frank Walter, 66701 Beckingen (DE)
(74) Vertreter: Prinz & Partner mbB

(56) Entgegenhaltungen:
- DE-U1-202008 005 514
- DE-U1-202009 009 446
- US-A- 5 355 693
- US-A1- 2007 295 017

## Beschreibung

Die Erfindung betrifft ein Schranksystem für einen Caravan.

Zur Klimatisierung eines Caravans (Wohnmobil oder Anhänger) können Klimageräte verwendet werden, mit denen Luft bei Bedarf gekühlt oder erwärmt und dann in den Innenraum eingeblasen werden kann. Bekannt sind Aufdachklimageräte und Stauraumklimageräte.

Aufdachklimageräte sind auf dem Dach des Caravans angebracht. Nachteilig hierbei ist, dass sie die Höhe und den Schwerpunkt des Caravans nachteilig verändern.

Stauraumklimageräte sind im Innenraum des Caravans angebracht. Nachteilig hierbei ist, dass für sie wertvoller Stauraum geopfert werden muss. Weiterhin schränken sie die Optionen für einen Ausbau des Innenraums ein.

Die DE 20 2008 005514 U1 beschreibt ein Klimagerät zum Einbau in ein Fahrzeug. Das Klimagerät ist zur Befestigung an einer Seiteninnenwand des Fahrzeugs, beispielsweise in einem Einbauschrank vorgesehen. Zur Befestigung des Klimageräts können senkrecht zu einer Rückwand des Gehäuses des Klimageräts verlaufende Zwischenböden verwendet werden. Für die Abgabe von Kaltluft ist an einer Seite des Klimageräts eine Öffnung für die Verbindung mit einem Kaltluftkanal vorgesehen. Des Weiteren ist eine Öffnung für eine Verbindung mit einem Versorgungskanal vorgesehen.

Die Aufgabe der Erfindung besteht darin, die Klimatisierung eines Innenraums eines Caravans so zu ermöglichen, dass die sich ergebenden Beeinträchtigungen minimal sind.

Zur Lösung dieser Aufgabe ist erfindungsgemäß ein Schranksystem für einen Caravan vorgesehen, mit mindestens zwei vertikalen Schrankwänden, mindestens einem Schrankboden, der verstellbar in einer von mehreren vorgegebenen Höhen zwischen den Schrankwänden angeordnet ist, und einer Vorrüstung für ein Klimagerät, das im Schranksystem installiert werden kann, wobei die Vorrüstung einen Zuluftkanal aufweist, welcher sich über die gesamte Höhe des Schranksystems erstreckt, und wobei der Zuluftkanal mehrere vordefinierte Anschlussöffnungen aufweist. Die Erfindung beruht auf dem Grundgedanken, einen flexible anpassbaren Innenausbau zu verwenden, der standardisiert vorgehalten und mit geringem Aufwand an den jeweiligen Kundenwunsch angepasst werden kann. Beispielsweise können, wenn ein Kunde gar kein Klimagerät ordert, im Schranksystem mehr Staufächer eingebaut werden. Wenn der Kunde ein Klimagerät ordert, wird diese geeignet eingebaut, und der verbleibende Stauraum kann in der gewünschten Weise genutzt werden, beispielsweise als Staufach für Kleidung oder zum Einbau eines Kühlschranks.

Gemäß einer Ausgestaltung der Erfindung ist vorgesehen, dass im Schranksystem ein Klimagerät installiert ist. Dieses kann vorinstalliert sein, so dass der Montageaufwand im Caravan geringer ist.

Gemäß einer bevorzugten Ausführungsform ist vorgesehen, dass das Klimagerät ein Split-Klimagerät ist und eine erste Gruppe von Bauteilen des Klimageräts räumlich getrennt von einer zweiten Gruppe von Bauteilen des Klimageräts angeordnet ist. Hierdurch ist zum einen eine optimale Raumausnutzung möglich. Zum anderen kann verhindert werden, dass der Schwerpunkt des Caravans nach oben wandert, indem schwere Bauteile des Klimageräts möglichst tief angeordnet werden.

Gemäß einer Ausgestaltung der Erfindung ist vorgesehen, dass die erste Gruppe einen Verdichter, einen Verflüssiger und einen Lüfter aufweist. Hierbei handelt es sich um die schwereren Bauteile eines Kompressor-Kältekreises, die möglichst weit unten angeordnet werden sollten.

Gemäß einer alternativen Ausgestaltung der Erfindung ist vorgesehen, dass die erste Gruppe einen Austreiber und eine Heizvorrichtung aufweist. Hierbei handelt es sich um die schwereren Bauteile eines Absorber-Kältekreises, die möglichst weit unten angeordnet werden sollten.

Vorzugsweise ist vorgesehen, dass die zweite Gruppe einen Luftausströmer aufweist. Dieser kann entfernt von den Bauteilen der ersten Gruppe weit oben angeordnet werden, so dass gekühlte Luft in der Nähe der Decke des Innenraums in diesen einströmt und sich von dort nach unten verteilt.

Die zweite Gruppe der Bauteile des Klimageräts kann ein Gebläse aufweisen. Hierdurch werden der Luftdurchsatz und damit die Effektivität des Klimageräts gesteigert.

Gemäß einer alternativen Ausführungsform ist vorgesehen, dass das Klimagerät ein Monoblock-Klimagerät ist. Dieses kann je nach gewünschter Einbausituation oberhalb oder unterhalb eines Kühlschranks angeordnet sein.

Gemäß einer Ausgestaltung der Erfindung ist vorgesehen, dass die Vorrüstung eine integrierte Luftführung aufweist. Hierdurch wird der Aufwand verringert, für jeden Ausbau des Caravans individuell eine Luftführung einzuplanen und diese auch unterzubringen.

Vorzugsweise sind dabei vordefinierte Schnittstellen vorgesehen, mit denen ein Luftausströmer an die Luftführung angeschlossen werden kann. Dies verringert den Montageaufwand weiter.

Gemäß der Erfindung weist die Vorrüstung eine integrierte Zuluftführung auf. Auch dies verringert den Aufwand für die Konzeption und Implementierung von Kanälen oder Schläuchen, mit denen die Zuluft zum Klimagerät geführt wird.

Erfindungsgemäß sind dabei vordefinierte Schnittstellen vorgesehen, mit denen das Klimagerät an die Zuluftführung angeschlossen werden kann. Dies verringert den Montageaufwand weiter.

Gemäß einer Ausführungsform der Erfindung ist vorgesehen, dass die Vorrüstung eine Dichtung enthält. Dies ist insbesondere dann vorteilhaft, wenn im Schranksystem ein Klimagerät, beispielsweise ein Monoblock-Klimagerät, installiert ist oder werden kann, das mit einem organischen oder einem natürlichen Kältemittel arbeitet. In diesem Fall muss das Klimagerät gegenüber dem Raum, in dem das Schranksystem installiert ist, abgedichtet und zur Außenumgebung belüftet sein. Mit einer vorinstallierten Dichtung lassen sich die Dichtigkeitsanforderungen mit geringem Aufwand einhalten.

Die Erfindung wird nachfolgend anhand einer Ausführungsform beschrieben, die in den beigefügten Zeichnungen dargestellt ist. In diesen zeigen:
Figur 1 in einer schematischen Vorderansicht ein Schranksystem für einen Caravan gemäß einer ersten Ausführungsform der Erfindung;
Figur 2 eine Schnittansicht entlang der Ebene II-II von Figur 1;
Figur 3 in einer schematischen Vorderansicht das Schranksystem von Figur 1 fertig bestückt;
Figur 4 in einer Schnittansicht ein Schranksystem gemäß einer zweiten Ausführungsform der Erfindung; und

die Figuren 5a bis 5c schematisch verschiedene Anordnungen von Kühlschrank und Klimagerät in einem erfindungsgemäßen Schranksystem.

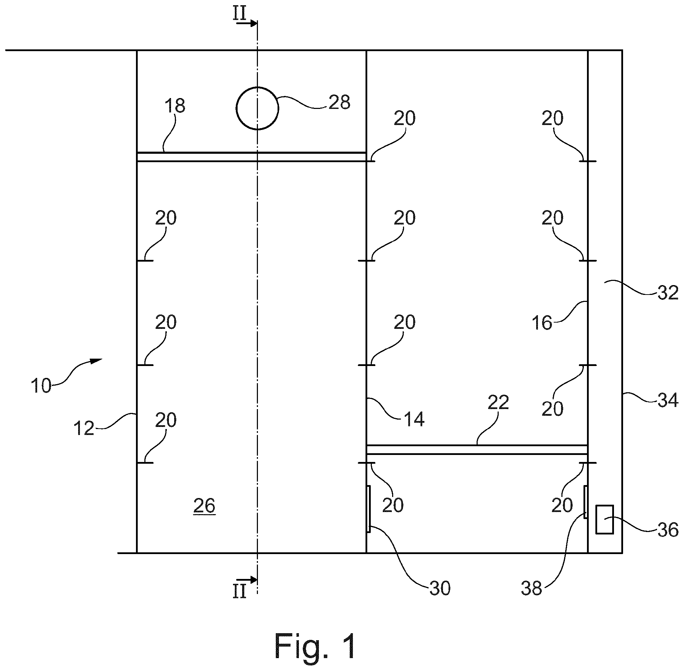

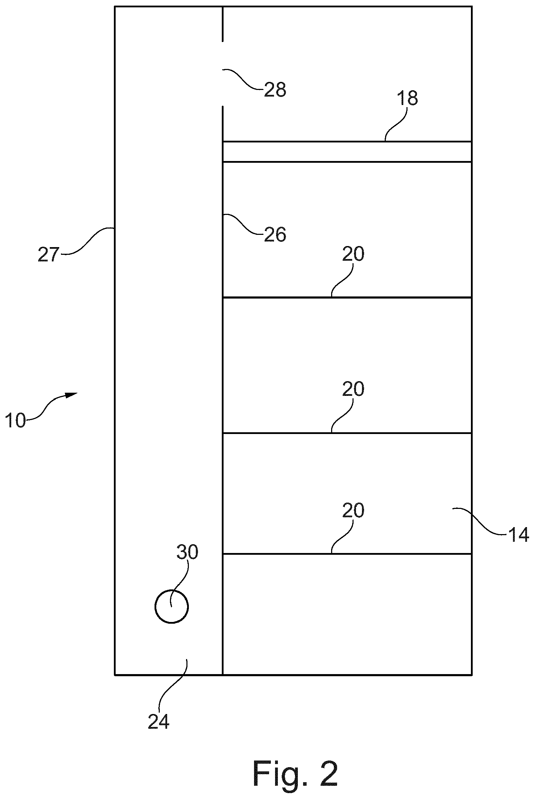

In den Figuren 1 und 2 ist schematisch ein Schranksystem 10 gemäß einer ersten Ausführungsform gezeigt, das zur Anbringung im Innenraum eines Caravans vorgesehen ist. Es enthält mehrere vertikale Schrankwände 12, 14, 16, die im Innenraum angebracht werden, beispielsweis an einer Außenwand des Caravans verschraubt und/oder am Boden und der Decke in geeignete Aufnahme eingesetzt werden.

Die Schrankwände 12, 14, 16 können aus Holz hergestellt werden. Je nach gewünschter Optik können die sichtbaren Kanten geeignet furniert werden, oder es kann für einen Vollholz-Ausbau eine geeignete Holzart verwendet werden.

Zwischen den Schrankwände 12 und 14 ist hier ein Schrankboden 18 in einer von mehreren vordefinierten Ebenen oder Höhen angeordnet (im gezeigten Ausführungsbeispiel in einer Ebene weit oben). Diese Ebenen sind durch eine Rastsystem 20 definiert, das aus vorgebohrten Löchern, Öffnungen einer Einhängeschiene etc. besteht, so dass nach Art eines Rack-Systems ein oder mehrere Schrankböden mit minimalem Aufwand in einer individuell passenden Position angeordnet werden können.

Zwischen den beiden Schrankwänden 14, 16 ist hier ein Schrankboden 22 angeordnet, der sich im gezeigten Ausführungsbeispiel in einer unteren Ebene befindet.

Das Schranksystem 10 ist mit einer Vorrüstung für ein Klimagerät versehen. Die Vorrüstung enthält beim gezeigten Ausführungsbeispiel eine Luftführung 24, mit der klimatisierte Luft von einem Klimagerät hin zu einem Ausströmer geleitet werden kann, von dem sie dann in den Innenraum des Caravans eintritt.

Die Luftführung 24 ist hier ein flacher Kanal, der sich hinter einer Rückwand 26 erstreckt, die zwischen den beiden Schrankwänden 12, 14 angeordnet ist. Seitlich ist der die Luftführung 24 bildende Kanal durch Verlängerungen der Schrankwände 12, 14 und eine Außenwand 27 abgegrenzt, die sich parallel zur Rückwand 26 erstreckt.

Als Teil der Vorrüstung für den Einbau eines Klimageräts kann die Rückwand 26 mit einer Austrittsöffnung 28 versehen sein, die zur Luftführung 24 führt und entweder durch eine Abdeckung verschlossen ist, solange kein Klimagerät montiert ist, oder die durch eine Sollbruchstelle oder ähnliches vordefiniert ist.

Wie in den Figuren 1 und 2 zu sehen ist, befindet sich die Austrittsöffnung 28 auf einem Niveau, so dass sie oberhalb des Schrankbodens 18 liegt.

Die Luftführung 24 ist weiterhin mit einer Eintrittsöffnung 30 vorgerüstet, die sich durch die Schrankwand 14 erstreckt und hier auf einem solchen Niveau angeordnet ist, dass sie sich unterhalb des Schrankbodens 22 befindet, der zwischen den beiden Schrankwänden 14, 16 eingehängt ist.

Wie in Figur 1 zu sehen ist, ist das Schranksystem 10 auch mit einer Vorrüstung in der Form eines Zuluftkanals 32 versehen, mit der Zuluft zu einem Klimagerät geleitet werden kann. Der Zuluftkanal 32 ist hier neben der Schrankwand 16 angeordnet, indem parallel zur Schrankwand 16 eine Außenwand 34 angeordnet ist.

Der Zuluftkanal 32 weist eine Außenöffnung 36 auf, die mit einem Zulufteinlass in der Außenhaut des Caravans in Verbindung steht und mit der Außenluft angesaugt werden kann.

Der Zuluftkanal 32 weist weiterhin eine Anschlussöffnung 38 auf, die sich durch die Schrankwand 16 erstreckt, so dass ein Klimagerät mit Außenluft versorgt werden kann.

Da sich der Zuluftkanal 32 über die gesamte Höhe des Schranksystems 10 erstreckt, kann ein Klimagerät flexibel auf beliebiger Höhe im Schranksystem montiert werden. Es muss dann lediglich die Anschlussöffnung 38 in der richtigen Höhe ausgebildet werden. Dies kann dadurch erleichtert werden, dass als Teil der Vorrüstung mehrere Anschlussöffnungen vordefiniert werden, beispielsweise mittels Sollbruchstellen.

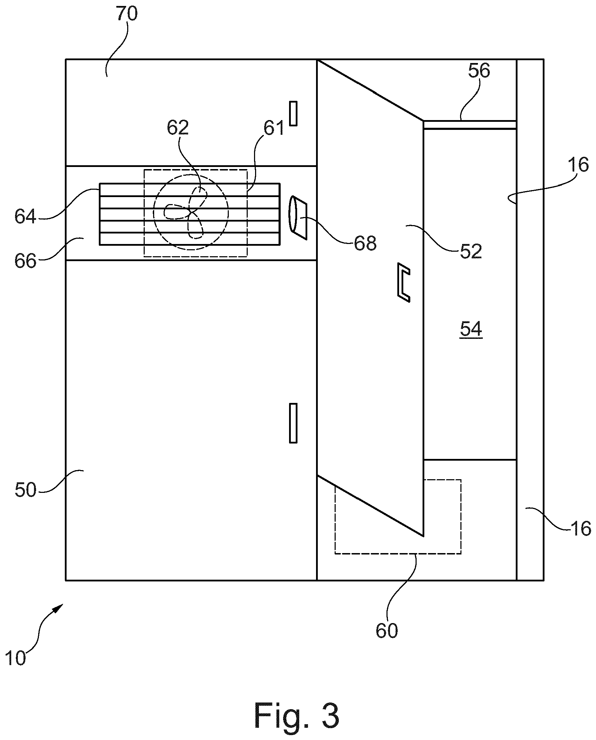

In Figur 3 ist ein Schranksystem 10 in einem bestückten Zustand gezeigt.

Im Raum zwischen den Schrankwänden 12, 14 ist unten ein Kühlschrank 49montiert, von dem hier nur die Kühlschranktüre 50 zu sehen ist. Im Raum zwischen den Schrankwänden 14, 16 ist hinter einer Schranktür 52 ein Staufach 54 für Kleider eingerichtet, in dem sich auch eine Kleiderstange 56 befindet.

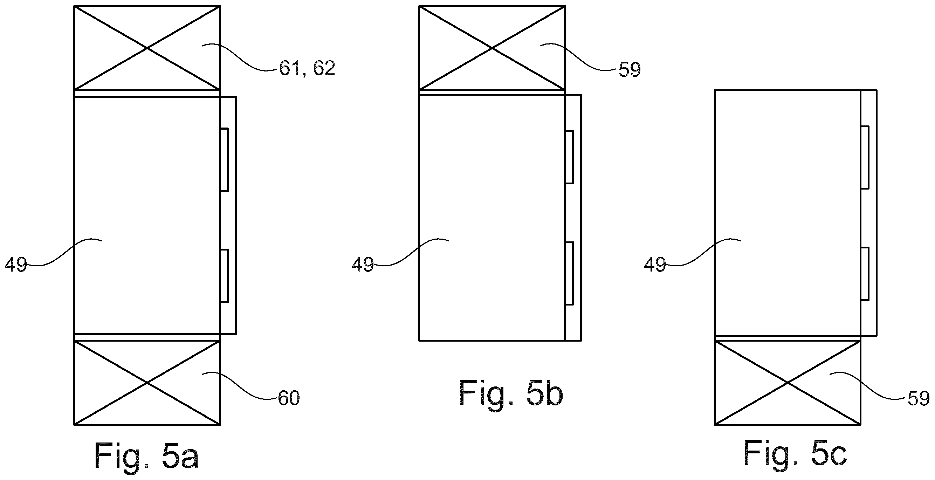

Weiterhin ist das Schranksystem 10 mit einem Klimagerät bestückt. Dieses ist hier als Split-Klimagerät 59 ausgeführt, weist also eine erste und eine zweite Gruppe von Bauteilen auf, die räumlich getrennt voneinander angeordnet sind (siehe auch Figur 5a).

Eine erste Gruppe von Bauteilen des Klimageräts 59 ist hier schematisch als Block 60 dargestellt, der unterhalb des Staufachs 54 eingebaut ist.

Beim eingebauten Klimagerät handelt es sich um ein Klimagerät mit Kältemittelkreis.

In der ersten Gruppe von Bauteilen sind hier ein Verdichter, ein Verflüssiger und ein Lüfter angeordnet. Somit sind alle schweren Bauteile tief im Caravan angeordnet, was sich vorteilhaft auf die Lage des Schwerpunkts auswirkt.

In der zweiten Gruppe von Bauteilen sind ein Verdampfer 61 und ein Gebläse 62 angeordnet, mit dem Luft, der am Verdampfer 61 Wärme entzogen wurde, durch einen Luftausströmer 64 in den Innenraum des Caravans eingebracht wird. Der Luftausströmer ist in einer Öffnung in einer Blende 66 angebracht, die zwischen den beiden Schrankwänden 12, 14 oberhalb des Kühlschranks angeordnet ist.

In die Blende 66 kann auch eine Bedieneinheit 68 für das Klimagerät integriert sein.

Mit den Kanälen 24, 32 (und ggfls. weiteren Kanälen) ist die Luftzirkulation zu und von den Bauteilen der beiden Gruppen gewährleistet, also insbesondere der Abtransport der am Verdichter der ersten Gruppe anfallenden Abwärme und die Zufuhr von zu kühlender Luft zum Verdampfer der zweiten Gruppe.

Oberhalb der Blende 66 ist hier ein weiteres Staufach vorgesehen, das von einer Tür 70 verschlossen ist.

Aufgrund der Luftführung 24 und der Zuluftführung 32 können die beiden Gruppen von Bauteilen des Klimageräts flexibel auf unterschiedlichen Niveaus innerhalb des Schranksystems angeordnet und damit an individuelle Aufteilungen angepasst werden.

Selbstverständlich ist das erfindungsgemäße Konzept nicht auf ein Schranksystem mit insgesamt zwei Feldern (oder drei Schrankwänden) beschränkt. Es kann auch eine beliebige andere Anzahl von Schrankwänden verwendet werden.

In das Schranksystem können auch andere Geräte eingebaut werden, beispielsweise ein Backofen oder ein Mikrowellengerät. Auch diese können mittels des Rack-Systems flexible und mit geringem Aufwand entsprechend den jeweiligen Anforderungen angebracht werden.

Insgesamt ist der Fahrzeughersteller mit dem erfindungsgemäßen Schranksystem bei der Erzeugung seiner Grundrissvarianten flexibler. Das Klimagerät kann dadurch zu dem jeweiligen Grundriss immer den optimalen Einbauort finden. Der Einbau dieser Baugruppe ist für den Fahrzeughersteller deutlich einfacher, da nur noch ein System mit vordefinierten Schnittstellen eingebaut werden muss. Fahrzeughöhe und Schwerpunkt bleiben nahezu unverändert. Außerdem geht dem Endkunden kein wertvoller Stauraum verloren.

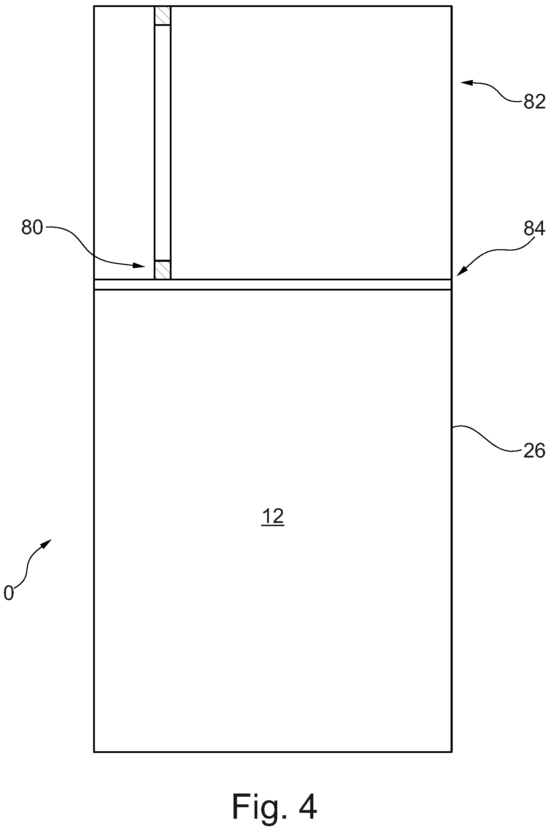

In Figur 4 ist schematisch ein Schranksystem gemäß einer zweiten Ausführungsform gezeigt. Für die von der ersten Ausführungsform bekannten Bauteile werden dieselben Bezugszeichen verwendet, und es wird insoweit auf die obigen Erläuterungen verwiesen.

In der Darstellung von Figur 4 ist das Schranksystem 10 etwa entlang der Ebene II-II von Figur 1 geschnitten. Bei der zweiten Ausführungsform ist vorgesehen, dass im unteren Bereich ein Kühlschrank 49 installiert wird. Über dem Kühlschrank (und damit dem Zwischenboden 18) kann ein Klimagerät installiert werden, insbesondere ein Monoblock-Klimagerät, das mit einem organischen oder einem natürlichen Kältemittel betrieben wird.

Die Anordnung des Kühlschranks und des Monoblock-Klimageräts gemäß der zweiten Ausführungsform ist in Figur 5b gezeigt.

Um den Bereich, in dem das Klimagerät angeordnet ist, vom Innenraum z.B. des Caravan zu isolieren, ist das Schranksystem mit einer Dichtung 80 vorgerüstet.

Im gezeigten Ausführungsbeispiel ist die Dichtung als umlaufende Leiste ausgeführt, an dem ein Flansch oder eine Deckelplatte anliegen kann, die Teil des Klimageräts ist. Auf diese Weise ergibt sich bei der Montage automatisch eine zuverlässige Abdichtung. Wenn gewünscht, kann an den Leisten noch eine Dichtauflage aus Kunststoff oder Gummi angebracht sein.

Der Raum oberhalb des Kühlschranks ist mit einer Zuluftöffnung 82 und einer Abluftöffnung 84 versehen, so dass der Raum, in dem das Klimagerät angeordnet werden kann, zuverlässig zur Umgebung be- und entlüftet ist.

Wenn kein Klimagerät installiert werden soll, kann der Raum oberhalb des Kühlschranks anderweitig verwendet werden, beispielsweise zur Installation eines kleinen Ofens.

In Figur 5c ist schematisch eine alternative Ausführungsform gezeigt, bei der das Monoblock-Klimagerät unterhalb des Kühlschranks angeordnet ist.

Allen Ausführungsformen gemeinsam ist, dass der Kühlschrank als feste Einheit (also mit darin integriertem Austreiber, Kondensator, Brenner, etc.) an einer geeigneten Stelle im Schranksystem angeordnet wird. Die Komponenten des Klimageräts werden dann entsprechend den Raumverhältnissen geeignet "verteilt", also entweder komplett oberhalb des Kühlschranks, komplett unterhalb des Kühlschranks oder verteilt ober- und unterhalb des Kühlschranks angeordnet. Unabhängig von der Anordnung der Komponenten des Klimageräts verwendet jedes Gerät (also Kühlschrank einerseits und Klimagerät andererseits) seinen eigenen, vom anderen Gerät getrennten Kälteprozess, der sich vom Kälteprozess des anderen Geräts unterscheidet.

## Patentansprüche

1. Schranksystem (10) für einen Caravan, mit mindestens zwei vertikalen Schrankwänden (12, 14, 16), mindestens einem Schrankboden (18, 22), der verstellbar in einer von mehreren vorgegebenen Höhen zwischen den Schrankwänden (12, 14, 16) angeordnet ist, und einer Vorrüstung (24, 28, 30, 32, 36, 38, 80) für ein Klimagerät, das im Schranksystem installiert werden kann, **dadurch gekennzeichnet dass**:
die Vorrüstung einen Zuluftkanal (32) aufweist, welcher sich über die gesamte Höhe des Schranksystems (10) erstreckt, und wobei der Zuluftkanal (32) mehrere vordefinierte Anschlussöffnungen (38) aufweist.

2. Schranksystem nach Anspruch 1, **dadurch gekennzeichnet, dass** ein Klimagerät (59) installiert ist.

3. Schranksystem nach Anspruch 2, **dadurch gekennzeichnet, dass** das Klimagerät ein Split-Klimagerät ist und eine erste Gruppe (60) von Bauteilen des Klimageräts räumlich getrennt von einer zweiten Gruppe (62) von Bauteilen des Klimageräts angeordnet ist.

4. Schranksystem nach Anspruch 3, **dadurch gekennzeichnet, dass** die erste Gruppe (60) einen Verdichter, einen Verflüssiger und einen Lüfter aufweist.

5. Schranksystem nach Anspruch 3, **dadurch gekennzeichnet, dass** die erste Gruppe einen Austreiber und eine Heizvorrichtung aufweist.

6. Schranksystem nach einem der Ansprüche 3 bis 5, **dadurch gekennzeichnet, dass** die zweite Gruppe (62) einen Luftausströmer aufweist.

7. Schranksystem nach einem der Ansprüche 3 bis 6, **dadurch gekennzeichnet, dass** die zweite Gruppe (62) ein einen Verdampfer und/oder ein Gebläse aufweist.

8. Schranksystem nach Anspruch 2, **dadurch gekennzeichnet, dass** ein Kühlschrank installiert ist, und dass das Klimagerät ein Monoblock-Klimagerät ist, das unterhalb des Kühlschranks angeordnet ist.

9. Schranksystem nach Anspruch 2, **dadurch gekennzeichnet, dass** ein Kühlschrank installiert ist, und dass das Klimagerät ein Monoblock-Klimagerät ist, das oberhalb des Kühlschranks angeordnet ist.

10. Schranksystem nach einem der vorhergehenden Ansprüche, **dadurch gekennzeichnet, dass** die Vorrüstung eine integrierte Luftführung (24) aufweist.

11. Schranksystem nach Anspruch 10, **dadurch gekennzeichnet, dass** vordefinierte Schnittstellen (28, 30) vorgesehen sind, mit denen ein Luftausströmer an die Luftführung (24) angeschlossen werden kann.

12. Schranksystem nach einem der Ansprüche 2-11, **dadurch gekennzeichnet, dass** das Klimagerät mittels der vordefinierten Anschlussöffnungen (38) an die Zuluftführung angeschlossen werden kann.

13. Schranksystem nach einem der vorhergehenden Ansprüche, **dadurch gekennzeichnet, dass** die Vorrüstung eine Dichtung (80) enthält.

14. Schranksystem nach Anspruch 13, **dadurch gekennzeichnet, dass** im Schranksystem ein Monoblock-Klimagerät installiert ist, das mit der Dichtung (80) zusammenwirkt.

## Claims

1. A cabinet system (10) for a caravan, comprising at least two vertical cabinet walls (12, 14, 16), at least one cabinet base (18, 22) which is adjustably arranged at one of several specified heights between the cabinet walls (12, 14, 16), and a pre-equipment (24, 28, 30, 32, 36, 38, 80) for an air conditioner which can be installed in the cabinet system, **characterized in that**:
the pre-equipment includes a supply air duct (32) which extends over the entire height of the cabinet system (10), and wherein the supply air duct (32) includes a plurality of predefined connection openings (38).

2. The cabinet system according to claim 1, **characterized in that** an air conditioner (59) is installed.

3. The cabinet system according to claim 2, **characterized in that** the air conditioner is a split air conditioner and a first group (60) of components of the air conditioner is arranged spatially separately from a second group (62) of components of the air conditioner.

4. The cabinet system according to claim 3, **characterized in that** the first group (60) includes a condenser, a liquefier and a fan.

5. The cabinet system according to claim 3, **characterized in that** the first group includes an expeller and a heating device.

6. The cabinet system according to any of claims 3 to 5, **characterized in that** the second group (62) includes an air diffuser.

7. The cabinet system according to any of claims 3 to 6, **characterized in that** the second group (62) includes an evaporator and/or a blower.

8. The cabinet system according to claim 2, **characterized in that** a refrigerator is installed, and that the air conditioner is a monoblock air conditioner which is arranged below the refrigerator.

9. The cabinet system according to claim 2, **characterized in that** a refrigerator is installed, and that the air conditioner is a monoblock air conditioner which is arranged above the refrigerator.

10. The cabinet system according to any of the preceding claims, **characterized in that** the pre-equipment includes an integrated air duct (24).

11. The cabinet system according to claim 10, **characterized in that** predefined interfaces (28, 30) are provided, by means of which an air diffuser can be connected to the air duct (24).

12. The cabinet system according to any of claims 2-11, **characterized in that** the air conditioner can be connected to the supply air duct by means of the predefined connection openings (38).

13. The cabinet system according to any of the preceding claims, **characterized in that** the pre-equipment contains a seal (80).

14. The cabinet system according to claim 13, **characterized in that** in the cabinet system a monoblock air conditioner is installed, which cooperates with the seal (80).

## Revendications

1. Système d'armoire (10) pour caravane, comportant au moins deux parois d'armoire verticales (12, 14, 16), au moins un fond d'armoire (18, 22) qui est agencé entre les parois d'armoire (12, 14, 16) de manière ajustable à une hauteur parmi plusieurs hauteurs prédéterminées, et un pré-équipement (24, 28, 30, 32, 36, 38, 80) pour un appareil de climatisation qui est apte à être installé dans le système d'armoire, **caractérisé en ce que** :
le pré-équipement présente un canal d'air d'alimentation (32) qui s'étend sur toute la hauteur du système d'armoire (10), et **en ce que** le canal d'air d'alimentation (32) présente une pluralité d'orifices de raccordement (38) prédéfinies.

2. Système d'armoire selon la revendication 1, **caractérisé en ce qu'**un appareil de climatisation (59) est installé.

3. Système d'armoire selon la revendication 2, **caractérisé en ce que** l'appareil de climatisation est un appareil de climatisation split et **en ce qu'**un premier groupe (60) de composants de l'appareil de climatisation est spatialement séparé d'un deuxième groupe (62) de composants de l'appareil de climatisation.

4. Système d'armoire selon la revendication 3, **caractérisé en ce que** le premier groupe (60) présente un condenseur, un liquéfacteur et une soufflante.

5. Système d'armoire selon la revendication 3, **caractérisé en ce que** le premier groupe présente un bouilleur et un dispositif de chauffage.

6. Système d'armoire selon l'une des revendications 3 à 5, **caractérisé en ce que** le deuxième groupe (62) présente un diffuseur d'air.

7. Système d'armoire selon l'une des revendications 3 à 6, **caractérisé en ce que** le deuxième groupe (62) présente un évaporateur et/ou un ventilateur.

8. Système d'armoire selon la revendication 2, **caractérisé en ce qu'**un réfrigérateur est installé et **en ce que** l'appareil de climatisation est un appareil de climatisation monobloc qui est agencé au-dessous du réfrigérateur.

9. Système d'armoire selon la revendication 2, **caractérisé en ce qu'**un réfrigérateur est installé et **en ce que** l'appareil de climatisation est un appareil de climatisation monobloc qui est agencé au-dessus du réfrigérateur.

10. Système d'armoire selon l'une des revendications précédentes, **caractérisé en ce que** le pré-équipement présente une conduite d'air intégrée (24).

11. Système d'armoire selon la revendication 10, **caractérisé en ce qu'**il est prévu des interfaces prédéfinies (28, 30) au moyen desquelles un diffuseur d'air est apte à être raccordé à la conduite d'air (24).

12. Système d'armoire selon l'une des revendications 2 à 11, **caractérisé en ce que** l'appareil de climatisation est apte à être raccordé à la conduite d'air d'alimentation au moyen des orifices de raccordement (38) prédéfinies.

13. Système d'armoire selon l'une des revendications précédentes, **caractérisé en ce que** le pré-équipement contient un joint (80).

14. Système d'armoire selon la revendication 13, **caractérisé en ce qu'**un appareil de climatisation monobloc qui coopère avec le joint (80) est installé dans le système d'armoire.
